# EUROPEAN PATENT SPECIFICATION

(11) **EP 2 404 401 B1**
(45) Date of publication and mention of the grant of the patent: **08.05.2013**
(21) Application number: 10706235.8
(22) Date of filing: 02.03.2010
(51) Int. Cl.: H04L 1/00

(54) **METHOD FOR CONTROLLING THE OPERATION OF A PROCESSING UNIT OF A WIRELESS COMMUNICATIONS DEVICE, AND CORRESPONDING COMMUNICATIONS DEVICE**
VERFAHREN ZUR STEUERUNG DES BETRIES EINER VERARBEITUNGSEINHEIT EINER DRAHTLOSEN KOMMUNIKATIONSVORRICHTUNG UND ZUGEHÖRIGE KOMMUNIKATIONSVORRICHTUNG
PROCÉDÉ DE SURVEILLANCE DU FONCTIONNEMENT D'UNE UNITÉ DE TRAITEMENT D'UN DISPOSITIF DE COMMUNICATION SANS FIL ET DISPOSITIF DE COMMUNICATION CORRESPONDANT

(30) Priority: 05.03.2009 FR 0951385
(43) Date of publication of application: 11.01.2012
(73) Proprietor: ST-Ericsson SA, Geneva (CH)
(72) Inventor: BATTISTON, Julien, F-72000 Le Mans (FR)
(74) Representative: Zapalowicz, Francis
(86) International application number: PCT/EP2010/052611
(87) International publication number: WO 2010/100140

(56) References cited:
- US-A1- 2003 235 162
- US-A1- 2006 240 859
- US-A1- 2007 206 631

## Description

The present invention relates to the domain of wireless communications and, more particularly, to the management of the computing capacity of a processing unit within a wireless communications device, such as a cellular mobile telephone.

The invention applies advantageously, but not restrictively, to communications systems defined by the UMTS, 3G or LTE standards, these acronyms being familiar to the person skilled in the art.

The purpose of microprocessors of communications devices is preferentially to enable, for example, the simultaneous operation of a plurality of applications such as, for example, a multimedia application and an application for processing data exchanged with the network. This latter application, enabling communication with the network, is very demanding in terms of computing-time resources.

Thus, it has been shown that the requirement for MIPS (Millions of Instructions Per Second), a term familiar to the person skilled in the art, increases in a linear manner with the downlink speed of the HSDPA module (High Speed Downlink Packet Access, a term familiar to the person skilled in the art). The HSDPA module is in fact a specific application of the application for processing data with the network, which operates in the physical and MAC layers (Medium Access Control, a term familiar to the person skilled in the art), and enables the downloading of data at speeds of 1.8 Mbit/s, 3.6 Mbit/s, 7.2 Mbit/s and 14.4 Mbit/s.

However, constraints still apply to the processors within the communications devices, which prevent them from being dimensioned in accordance with the most demanding use. These constraints are mainly the cost and size, and generally result in a compromise.

This compromise is generally implemented to the detriment of the application for processing data exchanged with the network. The HSDPA module is therefore constrained and a category is allocated to it which is lower than the speed that it can support. Thus, a category 8 HSDPA corresponding to the maximum speed of 7.2 Mbit/s will be constrained to category 6, corresponding to a maximum speed of 3.6 Mbit/s.

The different speed according to the category is explained by a greater allocation of WCDMA codes, a term familiar to the person skilled in the art. Thus, 15 codes can be allocated to a category 10 HSDPA, whereas 10 codes can be allocated to a category 8 HSDPA; the speed being generally proportional to the number of allocated codes.

The constraint represents one of the solutions currently implemented. However, when the multimedia applications are no longer being used by the telephone user, it would have been possible to use the HSDPA with a higher category, without being limited by the computing resources of the processing unit.

To overcome the problem of processor overload, methods have also been proposed which operate above the IP layer (Internet Protocol, a term familiar to the person skilled in the art), in which it is provided to send negative acknowledgements NACK and to reject the data packets if the microprocessor is overloaded.

These methods have numerous disadvantages.

Firstly, they are only applicable to communications using the TCP transport protocol (Transmission Control Protocol, a term familiar to the person skilled in the art), and are not suitable for communications using UDP (User Datagram Protocol, a term familiar to the person skilled in the art).

Secondly, the imposed limitation is abrupt.

Thirdly, if the "slow start" mechanism, a term familiar to the person skilled in the art, is employed, the speed will increase very slowly.

US2007/0206631AI discloses a control of radioprocess in which for example, a control unit may change the value of a chanel quality information (CQI) to a value worse than an actual value when two potentially interfering systems are scheduled for simultaneous operation.

US 2003/0235162Al discloses a method for reducing transmission errors in a third generation cellular system (CQI) by using in particular channel quality information values corresponding to worst or best possible values of CQI.

According to one example it is proposed to tolerate sporadic overload so that the category of the HSDPA does not have to be limited. It is equally advantageously proposed to predict an overload before running the applications, and to limit the speed in a gradual manner, before the processing unit becomes overloaded and on detection of overload.

According to one example, a system is proposed for controlling the operation of a processing unit, enabling the speed of the communication to be limited in a gradual manner and independently of the type of transport protocol which is used.

According to one aspect, a method is proposed for controlling the operation of a processing unit of a wireless communications device connected to a network via a communications channel, said processing unit being configured to process at least one application for processing data exchanged with the network, and, in general, at least one other application, such as a multimedia application.

According to this aspect, in the presence of a detected or predictable processing overload of the processing unit, a transmission is provided, from the device to the network, of quality information representing a fictitious quality of said channel lower (less good) than the actual quality of said channel in such a way as to obtain a reduction in the speed of said data transmitted from the network to the device.

Channel quality information is therefore advantageously used here, for example the CQI indicator (Channel Quality Indicator, a term familiar to the person skilled in the art) defined in the HSDPA standard, or the class of service identifier QCI (QoS Class Identifier, a term familiar to the person skilled in the art), defined in the LTE standard to "make the network believe" that the data reception quality in the telephone is lower than it is in reality, which will cause a speed reduction and solve the problem of the processing overload of the processor with no abrupt limitation or loss of time due to rejections of packets and their retransmission as in the prior art.

Thus, the speed can be reduced in a progressive, gradual and continuous manner until the speed which prevents further processor overload is obtained. In the case of a prediction, the speed is reduced in a measured manner before the processor is overloaded. A system for continuous control of the flow between the network and the communications device, in which no packet is rejected, is thus proposed here.

According to one embodiment, in the presence of an overload, said transmission comprises a determination of the maximum downlink data speed which can be supported by the processing unit with no risk of processing overload, and a conversion of this speed into said quality information.

According to a different embodiment, the application for processing data exchanged with the network comprises HSDPA processing.

According to a different aspect, a wireless communications device is proposed comprising an interface configured to be connected to a network via a communications channel and a processing unit configured to process at least one application for processing data intended to be exchanged with the network.

According to this aspect, the proposed device comprises control means suitable for detecting an existing or predictable processing overload of the processing unit and elaborating means configured to elaborate, in the presence of an existing or predicable processing overload, quality information representing a fictitious quality of said channel which is lower than the quality of said channel, and to forward this quality information to said interface with a view to transmitting it to the network.

According to one embodiment, the elaborating means comprise determination means suitable for determining the maximum downlink data speed which can be supported by the processing unit without risk of processing overload, and conversion means suitable for converting this speed into said quality information.

According to a different embodiment, the device comprises HSPDA processing means incorporating conversion means.

The quality information may be a channel quality indicator or a class of service identifier CQI or QCI.

Other advantages and characteristics of the invention can be found in the detailed description of embodiments, given by way of a non-limiting example and illustrated by the attached drawings, in which:
Figure 1 shows an example of a flowchart of the operating control of the processing unit according to the invention;
Figure 2 shows an embodiment of the speed-limiting system according to the invention within a communications device in a 3G network;
Figure 3 shows a scale of HSDPA speeds according to the values of the CQI indicator and the categories; and
Figure 4 shows the exchanges between the applications and the operating control system.

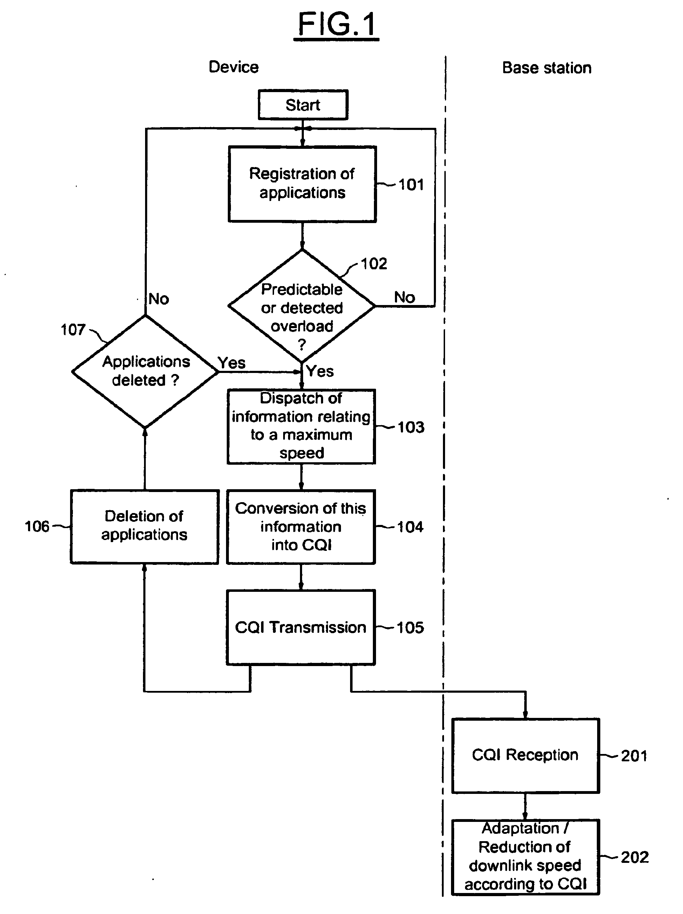

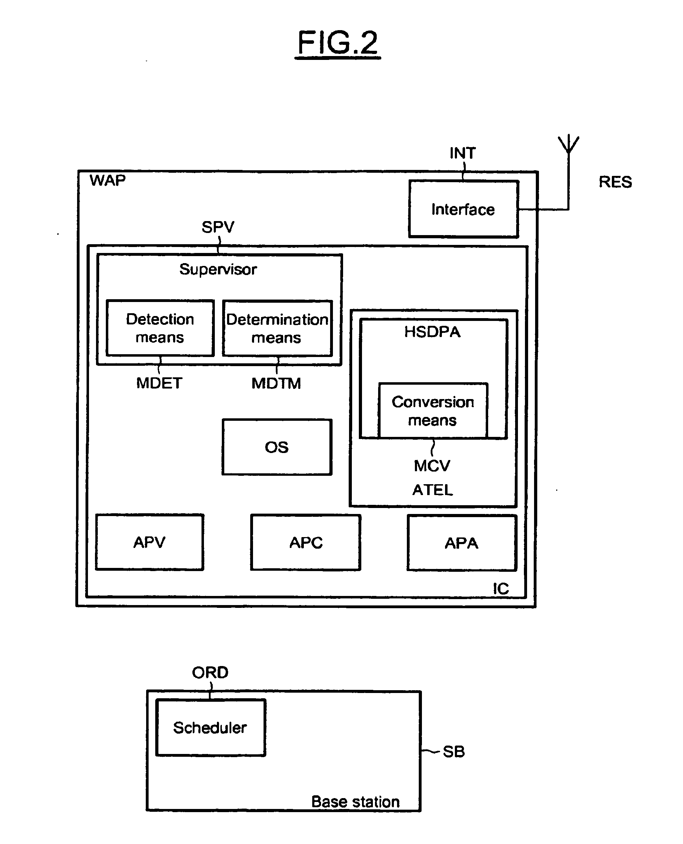

Figure 1 shows the different steps of an example of a method for controlling the operation of the processing unit of a wireless communications device such as, for example, the device shown in Figure 2.

Firstly, a step entailing the registering of the applications is implemented (101). In this step, the means for controlling or the system for controlling the operation of the processing unit or supervisor registers the requests of the different applications and summates their different MIPS requirements.

In the following step (102), this sum is compared with the MIPS resources of the processing unit. Thus, if this sum is lower than the resources of the processing unit and if no overload detection is received, no action is taken by the supervisor.

However, if the sum is higher or if an overload is detected, the supervisor sends information relating to a maximum speed (103). This information corresponds to the maximum speed permissible by the processing unit without incurring processing overload. This information is intended for the application whose speed is to be restricted to prevent further processing unit overload, while being able to continue running the multimedia applications. In this case, the application whose speed is to be restricted is the application for processing data exchanged with the network and, more precisely, the HSDPA module within this application.

The standard or permissible maximum speed is interpreted by the HSDPA module. The latter converts the maximum speed information into reception quality information, for example the information referred to as the "Channel Quality Indicator" CQI (104) relating to this maximum speed. This information is then transmitted to the network (105). This then results in a reduction in the downlink data speed until it reaches the speed corresponding to the transmitted CQI in such a way as to clear the overload of the processing unit.

It is possible that some applications will stop following the transmission of the CQI. The supervisor then deletes the applications which indicate that they have stopped (106). If no application is deleted, the system is looped and returns to the step (101). Otherwise, if applications have been deleted since the dispatch of the CQI (107), this is taken into account in recalculating the maximum speed. The procedure then returns to the step (103) entailing the dispatch of information relating to a maximum speed.

Thus, if, since the dispatch of the CQI, additional resources have become available for an additional speed of the HSDPA module, these resources will be allocated to it.

Figure 2 shows, within a wireless communications device (WAP), the system (SPV) for controlling the operation of the processing unit (IC) of this device.

In addition to the processing unit (IC), the communications device also comprises an interface (INT) with the network (RES). These means may comprise an antenna and a radiofrequency processing stage.

Here, the processing unit (IC), for example the baseband processor of the device, comprises a plurality of applications (ATEL, APV, APA, APC) which have requirements for accessing the computing resources of the processing unit (IC). This processing unit offers access to its computing resources to the applications for processing data exchanged with the network (ATEL), for video processing (APV), audio processing (APA) or connectivity processing (APC). An operating system (OS) manages the access control of these applications to the resources of the processing unit. The supervisor analyses the accesses and assesses whether the processing unit is overloaded. The supervisor comprises detection means (MDET) and determination means (MDTM).

The different applications and means described here can be implemented in the form of software modules.

The detection and prediction means (MDET) are implemented by means for registering and deleting applications and means for comparison between the sum of the requested resources and the available resources.

In the case of a predictable overload, a determination of the maximum speed permissible by the processing unit without overload is implemented by the supervisor following the registration and deletion procedures. This determination is implemented here on the basis of the assumption that the MIPS resources are used up in a linear manner according to the speed.

To detect an overload, spy data are used in a conventional manner familiar to the person skilled in the art, enabling supervision of the performance of the basic task of the processing unit. This enables continuous supervision of the processing load of the processing unit in order to detect an overload. This may also enable quantitative evaluation of the processing unit overload. The means for predicting and detecting a processing overload may therefore be implemented in the form of software.

The determination means (MDTM) comprise means for calculating the difference between the sum of the requested resources and the available resources. In the case of a predicted overload, the required reduction in the speed of the HSDPA application is inferred from this difference. This inference is made by assuming a consumption of MIPS which varies in a linear manner with the HSDPA speed. The maximum speed that can be supported by the processing unit is then inferred from this necessary reduction.

In the case of a detected overload, the means for determining the maximum speed can directly infer a constant from the speed currently used by the application. In a different example, the maximum permissible speed can be determined on the basis of the quantitative evaluation of the overload of the processing unit, again assuring a consumption of MIPS which varies in a linear manner with the HSDPA speed. The determination means can therefore be implemented in the form of software.

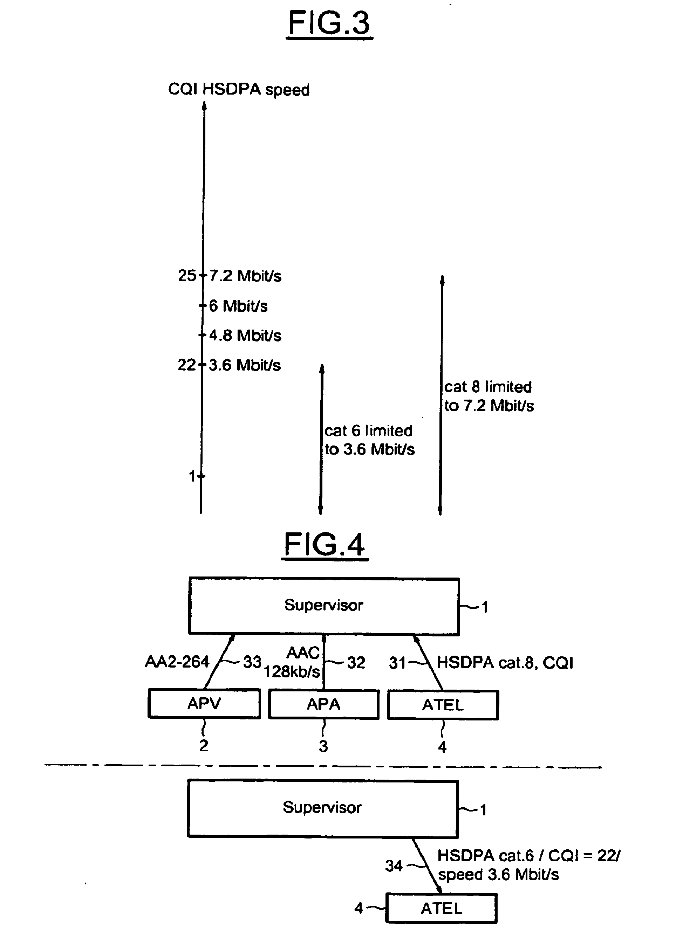

The HSDPA application is located within the telecommunications application (ATEL). The HSDPA module is one of the modules of the application for processing data exchanged with the network, an application also referred to as the telecommunications application. This module operates in layers 1, 2 and 3. The indicator CQI is calculated and transmitted in layer 1. The HSDPA module includes conversion means to convert the information relating to a maximum speed with no processing overload of the processing unit (IC) into quality information or CQI representing a fictitious quality of said channel lower than the actual quality of said channel. For this purpose, the HSDPA module uses a scale such as the scale shown in Figure 3, the use of which is described below.

The CQI information is received by the base station (SB) and processed by a scheduler (ORD), a term familiar to the person skilled in the art. The latter then adapts the speed of the data sent to the corresponding communications device according to the value of the CQI. This downlink speed allocation is carried out in accordance with the scale shown in Figure 3 and the category signalling of the HSDPA module which took place when the wireless communications device was switched on.

A linear scale such as the scale shown in Figure 3 is used to convert the maximum speed into the maximum permissible CQI.

The CQIs and the corresponding speeds at which the data will be sent to the wireless communications device by the network are shown on the y-axis. Two variation intervals are shown in addition to this y-axis. They show the limitation of the speed due to the category of the HSDPA. A downlink speed greater than 3.6 Mbit/s will not therefore be allocated to an HSDPA which has signalled itself as category 6 to the network.

The maximum permissible CQI can easily be inferred from the scale and the two intervals; for example, if the HSDPA module receives a maximum HSDPA speed of 4.8 Mbit/s as information from the operating control system, the maximum permissible CQI will then be 23.

In the case of the reception, shown in Figure 4, of a video through streaming, a term familiar to the person skilled in the art, the different applications register themselves and communicate particularly with regard to their requirement for MIPS resource.

Thus, the HSDPA module sends to the supervisor information (31) corresponding to the downlink speed at which the network data were sent to it.

The other applications also communicate with regard to their MIPS requirement. Thus, the audio and video applications transmit the CODEC used (32, 33) to the supervisor.

The supervisor then performs a calculation of the MIPS used by all of the applications. Supposing that the latter indicates a value greater than the capacities of the processing unit; a limitation must therefore be imposed by the supervisor.

The latter then sends a maximum permissible speed (34) to the HSDPA module of the application for processing data exchanged with the network in order to avoid overloading the processing unit. The HSDPA module then converts this maximum speed information into a CQI indication which is transmitted to the network, resulting on return in a reduction of the downlink data speed.

Instead of the maximum permissible speed, the supervisor may send to the HSDPA module the category at which it must operate. From this, the HSDPA module can then infer the maximum speed and the maximum permissible CQI.

In a different example, the maximum permissible CQI can be sent directly to the HSDPA module.

In a different usage case, the application for processing data exchanged with the network may use, in addition to the resources for processing the downlink speed, the resources corresponding to the processing of the uplink speed. In addition to the other applications, the two modules HSDPA and HSUPA (equivalent to the HSDPA module for the uplink) register their resource requirement with the supervisor (41, 42). Following this registration, the supervisor limits the maximum speed of the HSDPA module (43), if this is necessary.

This therefore enables the HSUPA module to signal itself and operate as a category 2. This therefore enables the use of a processor which can support the category 8 HSDPA and the category 2 HSUPA.

## Claims

1. Method for controlling the operation of a processing unit (IC) of a wireless communications device (WAP) connected to a network (RES) via a communications channel, said processing unit being configured to process at least one application for processing data exchanged with the network (ATEL), **characterized in that** the method comprises, in the presence of a detected or predictable processing overload of the processing unit, a transmission from the device to the network (RES) of quality information representing (105) a fictitious quality of said channel lower than the quality of said channel in such a way as to obtain a reduction in the speed of said data transmitted from the network to the device.

2. Method according to Claim 1, in which, in the presence of an overload, said transmission comprises a determination of the maximum downlink data speed (103) which can be supported by the processing unit (1C) with no risk of processing overload, and a conversion (104) of this speed into said quality information.

3. Method according to any one of Claims 1 or 2, in which the application for processing data exchanged with the network comprises an HSDPA processing.

4. Wireless communications device (WAP) comprising an interface (INT) configured to be connected to a network (RES) via a communications channel and a processing unit (IC) configured to process at least one application (ATEL) for processing data intended to be exchanged with the network (RES), **characterized in that** it comprises control means (MDET) suitable for detecting an existing or predictable processing overload of the processing unit (IC), and elaborating means configured to elaborate, in the presence of an existing or predictable processing overload, quality information representing a fictitious quality of said channel lower than the quality of said channel, and to forward this quality information to said interface with a view to transmitting it to the network.

5. Device according to Claim 4, in which the elaborating means comprise determination means (MDTM) suitable for determining the maximum downlink data speed which can be supported by the processing unit (IC) without risk of processing overload, and conversion means (MCV) suitable for converting this speed into said quality information.

6. Device according to Claim 5, comprising HSDPA processing means incorporating conversion means (MCV).

7. Device according to Claim 5 or 6, in which said quality information is a channel quality indicator (CQI).

## Patentansprüche

1. Verfahren zum Steuern des Betriebs einer Verarbeitungseinheit (IC) einer drahtlosen Kommunikationsvorrichtung (WAP), die über einen Kommunikationskanal mit einem Netz (RES) verbunden ist, wobei die Verarbeitungseinheit konfiguriert ist, wenigstens eine Anwendung für die Verarbeitung von Daten, die mit dem Netz (ATEL) ausgetauscht werden, zu verarbeiten, **dadurch gekennzeichnet, dass** das Verfahren bei Vorliegen einer detektierten oder vorhersagbaren Verarbeitungsüberlastung der Verarbeitungseinheit eine Übertragung von Qualitätsinformationen von der Vorrichtung zu dem Netz (RES) umfasst, die eine fiktive Qualität des Kanals repräsentieren (105), die niedriger ist als die Qualität des Kanals, derart, dass eine Verringerung der Geschwindigkeit der von dem Netz zu der Vorrichtung übertragenen Daten erhalten wird.

2. Verfahren nach Anspruch 1, wobei bei Vorliegen einer Überlastung das Übertragen ein Bestimmen der maximalen Abwärtsstrecken-Datengeschwindigkeit (103), die durch die Verarbeitungseinheit (IC) ohne Gefahr einer Verarbeitungsüberlastung unterstützt werden kann, und eine Umwandlung (104) dieser Geschwindigkeit in die Qualitätsinformationen umfasst.

3. Verfahren nach einem der Ansprüche 1 oder 2, wobei die Anwendung für die Verarbeitung von Daten, die mit dem Netz ausgetauscht werden, eine HSDPA-Verarbeitung umfasst.

4. Drahtlose Kommunikationsvorrichtung (WAP), die eine Schnittstelle (INT), die konfiguriert ist, über einen Kommunikationskanal mit einem Netz (RES) verbunden zu werden, und eine Verarbeitungseinheit (IC), die konfiguriert ist, wenigstens eine Anwendung (ATEL) für die Verarbeitung von Daten, die mit dem Netz (RES) ausgetauscht werden sollen, zu verarbeiten, umfasst, **dadurch gekennzeichnet, dass** sie Steuermittel (MDET), die geeignet sind, eine bestehende oder vorhersagbare Verarbeitungsüberlastung der Verarbeitungseinheit (IC) zu detektieren, und Entwicklungsmittel, die konfiguriert sind, bei Vorliegen einer bestehenden oder vorhersagbaren Verarbeitungsüberlastung Qualitätsinformationen zu entwickeln, die eine fiktive Qualität des Kanals repräsentieren, die niedriger ist als die Qualität des Kanals, und diese Qualitätsinformationen zu der Schnittstelle im Hinblick auf ihre Übertragung zu dem Netz weiterzuleiten, umfasst.

5. Vorrichtung nach Anspruch 4, wobei die Entwicklungsmittel Bestimmungsmittel (MDTM), die geeignet sind, die maximale Abwärtsstrecken-Datengeschwindigkeit, die durch die Verarbeitungseinheit (IC) ohne Gefahr einer Verarbeitungsüberlastung unterstützt werden kann, zu bestimmen, und Umwandlungsmittel (MCV), die geeignet sind, diese Geschwindigkeit in die Qualitätsinformationen umzuwandeln, umfassen.

6. Vorrichtung nach Anspruch 5, die HSDPA-Verarbeitungsmittel umfasst, die Umwandlungsmittel (MCV) enthalten.

7. Vorrichtung nach Anspruch 5 oder 6, wobei die Qualitätsinformationen einen Kanalqualitätsindikator (CQI) enthalten.

## Revendications

1. Procédé de contrôle du fonctionnement d'une unité de traitement (IC) d'un appareil de communication sans fil (WAP) couplé à un réseau (RES) via un canal de communication, ladite unité de traitement étant configurée pour traiter au moins une application de traitement de données échangées avec le réseau (ATEL), **caractérisé en ce que** le procédé comprend en présence d'une surcharge de traitement détectée ou prévisible de l'unité de traitement, une transmission depuis l'appareil vers le réseau (RES) d'une information de qualité représentative (105) d'une qualité fictive dudit canal inférieure à la qualité dudit canal de façon à obtenir une réduction du débit desdites données transmises du réseau vers l'appareil.

2. Procédé selon la revendication 1, dans lequel, en présence d'une surcharge, ladite transmission comprend une détermination du débit maximum (103) descendant de données pouvant être supporté par l'unité de traitement (IC) sans risque de surcharge de traitement, et une conversion (104) de ce débit en ladite information de qualité.

3. Procédé selon l'une quelconque des revendications 1 ou 2, dans lequel l'application de traitement de données échangées avec le réseau comprend un traitement de type HSDPA.

4. Appareil de communication sans fil (WAP) comprenant une interface (INT) configurée pour être couplée à un réseau (RES) via un canal de communication et une unité de traitement (IC) configurée pour traiter au moins une application (ATEL) de traitement de données destinées à être échangées avec le réseau (RES), **caractérisé en ce qu'**il comprend des moyens de contrôle (MDET) aptes à détecter une surcharge de traitement actuelle ou prévisible de l'unité de traitement (IC) et des moyens d'élaboration configurés pour élaborer en présence d'une surcharge de traitement actuelle ou prévisible, une information de qualité représentative d'une qualité fictive dudit canal inférieure à la qualité dudit canal, et pour délivrer cette information de qualité à ladite interface en vue de sa transmission vers le réseau.

5. Appareil selon la revendication 4, dans lequel les moyens d'élaboration comprennent des moyens de détermination (MDTM) aptes à déterminer le débit maximum descendant de données pouvant être supporté par l'unité de traitement (IC) sans risque de surcharge de traitement, et des moyens de conversion (MCV) aptes à convertir ce débit en ladite information de qualité.

6. Appareil selon la revendication 5, comprenant des moyens de traitement de type HSDPA incorporant les moyens de conversion (MCV).

7. Appareil selon la revendication 5 ou 6, dans lequel ladite information de qualité est un indicateur de qualité de canal (CQI).
